(19) Europäisches Patentamt / European Patent Office / Office européen des brevets

(11) **EP 4 398 434 A1**

(12) **EUROPEAN PATENT APPLICATION**

(43) Date of publication:
**10.07.2024 Bulletin 2024/28**

(21) Application number: **23150291.5**

(22) Date of filing: **04.01.2023**

(51) International Patent Classification (IPC):
*H02J 3/00* (2006.01)     *H02J 3/32* (2006.01)
*H02J 3/38* (2006.01)     *H02J 9/06* (2006.01)
*H02J 15/00* (2006.01)

(52) Cooperative Patent Classification (CPC):
**H02J 3/381; H02J 3/001; H02J 3/32; H02J 9/061;
H02J 15/008;** H02J 2300/28

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Siemens Gamesa Renewable Energy
A/S
7330 Brande (DK)**

(72) Inventor: **CHAUDARY, Abhishek
4600-014 Amarante (PT)**

(74) Representative: **SGRE-Association
Siemens Energy Global GmbH & Co. KG
SE I IM P Intellectual Property
Siemenspromenade 9
91058 Erlangen (DE)**

(54) **METHOD FOR CONTROLLING A POWER INPUT OF A HYDROGEN PRODUCTION DEVICE OF A RENEWABLE HYDROGEN POWER PLANT, COMPUTER PROGRAM PRODUCT AND RENEWABLE HYDROGEN POWER PLANT**

(57) A method for controlling a power input ($P_1$, $P_2$) of a hydrogen production device (7) of a renewable hydrogen power plant (1) connected to an electrical grid (2), the plant (1) comprising a renewable energy generation facility (3) for generating electrical power ($P_{RE}$) and a hydrogen production facility (4) for producing hydrogen (H) from the generated electrical power ($P_{RE}$), the hydrogen production facility (4) including the hydrogen production device (7) and an energy storage device (8), and the method comprising:

a) detecting (S1) a fault (46) of the electrical grid (2) based on a deviation of a received voltage value ($U_1$) of the grid (2) from a nominal voltage value (N), and

b) controlling (S2) the energy storage device (8) such that electrical power ($P_2$) is supplied from the energy storage device (8) to the hydrogen production device (7).

Thus, a fault ride-through for the hydrogen production facility is provided.

FIG 1

**Description**

The present invention relates to a method for controlling a power input of a hydrogen production device of a renewable hydrogen power plant, a computer program product and a renewable hydrogen power plant.

Renewable hydrogen (also called green hydrogen or clean hydrogen) is hydrogen produced by using renewable energy. It is a clean and versatile energy carrier which can be used as an alternative to fossil fuels. Renewable hydrogen can be produced by a renewable hydrogen power plant comprising both a renewable energy generation facility (e.g., a wind farm or a photovoltaic farm) and a hydrogen production facility. A hydrogen production facility includes, for example, an electrolysis unit using the generated electrical energy to convert water into hydrogen (e.g., hydrogen gas). Hence, the renewable hydrogen power plant is capable of producing two different energy carriers, namely electrical power and hydrogen. The generated electrical power is usually partly used for hydrogen production and is partly fed into an electrical grid.

The hydrogen production device (e.g., its electrolysis unit) conventionally operates in a standard voltage range and is configured to shut down in case that a voltage of the electrical grid deviates from this standard range. Shutting down the hydrogen production device is a complex and time-consuming process. Further, frequently shutting down the hydrogen production device and/or its electrolysis unit can deteriorate its functionality and reduce its lifetime.

It is one object of the present invention to provide an improved method, computer program product and renewable hydrogen power plant including/allowing an improved control of the renewable hydrogen power plant.

According to a first aspect, a method for controlling a power input of a hydrogen production device of a renewable hydrogen power plant connected to an electrical grid is provided. The renewable hydrogen power plant comprises a renewable energy generation facility for generating electrical power and a hydrogen production facility for producing hydrogen from the generated electrical power. Further, the hydrogen production facility includes the hydrogen production device and an energy storage device. The method comprises:

   a) detecting a fault of the electrical grid based on a deviation of a received voltage value of the electrical grid from a nominal voltage value, and
   b) controlling the energy storage device such that electrical power is supplied from the energy storage device to the hydrogen production device.

Thus, the hydrogen production facility includes in addition to the hydrogen production device also an energy storage device which is used for controlling the voltage of the hydrogen production device. In particular, the energy storage device is used for supplying electrical power to the hydrogen production device in case of a (e.g., short-term) fault of the electrical grid. Thus, even during a fault of the electrical grid, the voltage of the hydrogen production device can be maintained in a required voltage range. For example, if the electrical grid experiences a significant voltage drop or voltage increase, an electrical connection between the hydrogen production device and the electrical grid can be closed. Instead, electrical power can be supplied from the energy storage device to the hydrogen production device.

Hence, shutting down the hydrogen production device during a (e.g., short-term) fault of the electrical grid is not necessary. This also allows avoiding a time-consuming restart of the hydrogen production device. Moreover, the production of hydrogen can continue during a fault of the electrical grid. Thus, the production of hydrogen is not affected by a (e.g., short-term) fault of the electrical grid. Furthermore, by avoiding shutting down the hydrogen production device, in particular an electrolysis unit of the hydrogen production device, a functionality of the hydrogen production device, in particular of an electrolysis unit of the hydrogen production device, can be improved and its lifetime increased.

Thus, the proposed method provides a fault ride-through (FRT) for the hydrogen production device and, thus, of a power consumer of the electrical grid. In other words, the proposed hydrogen production facility is advantageously equipped with a fault ride-through system.

The proposed method is a method for controlling the power input of the hydrogen production device of the renewable hydrogen power plant. The proposed method is used, for example, for controlling that during normal condition of the grid the electrical power consumed by the hydrogen production device is supplied from the electrical connection member (i.e. from the renewable energy generation facility or the grid). Further, the method is used, for example, for controlling that during a grid fault the electrical power consumed by the hydrogen production device is supplied from the energy storage device of the hydrogen production facility.

For example, in step b), the energy storage device, the hydrogen production device and/or an AC-DC converter of the hydrogen production device may be controlled (e.g., in a coordinated fashion) to ensure that the hydrogen production device remains in a normal operational state without going into shutdown when a fault is detected in step a).
The electrical grid is an interconnected network for electricity delivery from producers to consumers.

The fault of the electrical grid is, for example, an undervoltage-fault during which the received (i.e. measured) voltage value of the grid is smaller than the nominal voltage value of the grid. The fault of the electrical grid can, for example, also be an overvoltage-fault during which the received (i.e. measured) voltage value of the grid is larger than the nominal voltage value of the grid.

The voltage value of the electrical grid is, for example, a root-mean-square voltage or peak voltage of an AC current of the electrical grid.

The renewable energy generation facility and the hydrogen production facility are electrically connected with each other and with the electrical grid, for example, at an electrical connection member (e.g., a connection bus). Further, the voltage value of the electrical grid is, for example, a voltage value measured at the electrical connection member.

Step a) includes, for example, receiving the voltage value of the electrical grid. Step a) further includes, for example, comparing the received voltage value with the nominal voltage value of the grid.

Step b) is, in particular, carried out (e.g., only) in the case that the fault of the electrical grid is detected in step a).

The renewable hydrogen power plant is, in particular, a socalled "green hydrogen power plant", i.e. a power plant for producing "green hydrogen". Green hydrogen is hydrogen produced based on renewable energy sources.

The renewable hydrogen power plant is, in particular, configured to deliver electrical power as well as hydrogen.

The provided method is not limited to a particular type of renewable energy generation facility and/or a particular type of power generation.

The renewable energy generation facility is, in particular, configured for generating electrical energy (electrical power) from renewable energy such as wind power, water power, solar power and/or by a photovoltaic process.

The renewable energy generation facility may, for example, comprise an own FRT-system.

The hydrogen production facility is, in particular, configured for producing hydrogen (e.g., hydrogen gas) from (e.g., a portion of) the electrical power generated by the renewable energy generation facility. The hydrogen production facility comprises, for example, one or more hydrogen production devices and one or more energy storage devices. Each hydrogen production device includes, for example, one or more electrolysis units. The electrolysis units are configured to convert, for example, water into hydrogen gas by using the electrical current produced by one or more generators of the renewable energy generation facility. Thereby, water is separated into hydrogen and oxygen by an electrolysis process. The hydrogen production facility may, for example, also comprise one or more hydrogen tanks for storing the produced hydrogen.

The provided method is not limited to a particular type of hydrogen production facility, hydrogen production device and/or energy storage facility.

The energy storage facility includes, for example, one or more electrical, mechanical, electromechanical and/or chemical storage devices.

According to an embodiment of the first aspect, the hydrogen production device includes an electrolysis unit and a capacitor electrically connected to the electrolysis unit. Further, the energy storage device is controlled such that, when the fault of the electrical grid is detected, electrical power is supplied from the energy storage device to the hydrogen production device by charging the capacitor of the hydrogen production device.

Thus, electrical power can be supplied from the charged capacitor of the hydrogen production device to the electrolysis unit of the hydrogen production device.

The renewable energy generation facility and the hydrogen production facility are, for example, electrically connected with each other and with the electrical grid at an electrical connection member (e.g., an connection bus). Further, the capacitor of the hydrogen production device is, for example, electrically connected via an AC-DC-converter to the electrical connection member.

According to a further embodiment of the first aspect, the method further comprises:

determining a voltage of the capacitor of the hydrogen production device, and
controlling the energy storage device based on the determined voltage such that electrical power is supplied from the energy storage device to the capacitor of the hydrogen production device when the determined voltage of the capacitor is smaller than a predetermined minimum voltage value.

Thus, the voltage, and hence the state of charge, of the capacitor of the hydrogen production device can be controlled. For example, the voltage of the capacitor of the hydrogen production device can be kept in a predetermined voltage range. The predetermined voltage range is, for example, a voltage range required for a failure-free operation of the hydrogen production device.

In embodiments of the first aspect, the fault of the electrical grid is detected by determining that the received voltage value of the electrical grid deviates from the nominal voltage value by at least a predetermined threshold.

Thus, the power supply of the hydrogen production device is only taken over by the energy storage device in the case of a significant difference (i.e., larger than the predetermined threshold) between the actual voltage value (received voltage value) and the nominal voltage value of the electrical grid.

The predetermined threshold corresponds, for example, to a percentage of +/- 5%, +/- 10% +/- 15% of the nominal voltage value.

According to a further embodiment of the first aspect, when a fault has been detected in step a), the hydrogen production device is controlled such that a power consumption of the hydrogen production device is reduced gradually to a predetermined minimum power value of the hydrogen production device.

Thus, the amount of energy to be provided by the energy storage device to keep the hydrogen production device operational during a grid fault can be reduced. This allows a size/storage capacity reduction of the energy storage device. Hence, costs can be reduced.

The predetermined minimum power value of the hydrogen production device has, for example, a value in the range of 10% to 25% of rated power of the hydrogen production device.

When it is detected that the grid fault has disappeared again, the power consumption of the hydrogen production device can be ramped up again from the predetermined minimum power value to the previous operational value.

According to a further embodiment of the first aspect,

the renewable energy generation facility and the hydrogen production facility are electrically connected with each other and with the electrical grid at an electrical connection member,
the hydrogen production device comprises an AC-DC converter for converting AC power supplied from the electrical connection member into DC power, an electrolysis unit for producing hydrogen by means of DC power supplied from the AC-DC converter and/or from the energy storage device, and a first control unit for controlling the AC-DC converter,
the energy storage device comprises a power storage unit and a second control unit for controlling the power storage unit,
the first control unit detects the fault of the electrical grid and sends an information about the detected fault to the second control unit, and
the second control unit sends a control signal to the power storage unit for controlling the power storage unit such that electrical power is supplied from the power storage unit to the hydrogen production device.

Having the AC-DC converter, the electrolysis unit can be supplied with a DC current. The AC-DC converter may convert an AC current of, for example, 690 V to a DC current of, for example, 1000 V. However, there are also other voltage values possible for the AC current and the DC current.

The renewable hydrogen power plant comprises, for example, a measurement unit for measuring the momentary voltage value of the electrical grid and/or for monitoring the voltage value of the electrical grid. The voltage value of the electrical grid is, for example, measured at said electrical connection member connecting the renewable energy generation facility and the hydrogen production facility with each other and with the grid. The electrical connection member is, for example, a connection bus.

The first control unit receives, for example, the voltage value of the electrical grid. The first control unit receives, for example, the voltage value of the electrical grid from said measurement unit.

The hydrogen production device may further comprise one or more DC-DC converter for transforming the DC current provided by the AC-DC converter to another voltage level.

According to a further embodiment of the first aspect,

the renewable energy generation facility and the hydrogen production facility are electrically connected with each other and with the electrical grid at an electrical connection member, and
when the fault of the electrical grid is detected, the hydrogen production device is controlled such that a supply of electrical power from the electrical connection member is stopped.

Thus, when there is no fault of the electrical grid detected, the hydrogen production device is supplied with electrical power from the electrical connection member (e.g., from the renewable energy generation facility/the grid via the electrical connection member). Further, when a fault of the electrical grid is detected, the supply via the electrical connection member is stopped and the energy storage device takes over the power supply of the hydrogen production device.

According to a further embodiment of the first aspect,

the renewable energy generation facility and the hydrogen production facility are electrically connected with each other and with the electrical grid at an electrical connection member, and
when it is determined that the fault of the electrical grid has disappeared again, the energy storage device is controlled such that the supply of electrical power from the energy storage device to the hydrogen production device is stopped, and/or the hydrogen production device is controlled such that a supply of electrical power from the electrical connection member to the hydrogen production device is reassumed.

Thus, when the grid fault has disappeared, the hydrogen production device reassumes the consumption of power from the renewable energy generation facility or the grid (via the electrical connection member).

For example, when the grid fault has disappeared, the hydrogen production device reassumes the consumption of power via the AC-DC converter of the hydrogen production device.

According to a further embodiment of the first aspect, when it is determined that the fault of the electrical grid has disappeared again, the energy storage device is controlled such that the supply of electrical power from the energy storage device to the hydrogen production device is ramped down from an operation power value to zero during a predetermined ramping time period, and the hydrogen production device is controlled such that the supply of electrical power from the electrical connection member to the hydrogen production device is ramped up from zero to the operation power value in the predetermined ramping time period.

Said ramp up and said ramp down are, for example, a linear ramp up and a linear ramp down, respectively. Further, the predetermined ramping time period is, in particular, a non-zero time period.

The ramping time period is, for example, 100 ms or more, 300 ms or more, 500 ms or more, 1000 ms or more and/or 5000 ms or more.

According to a further embodiment of the first aspect, when it is determined that the fault of the electrical grid has disappeared again, the method further comprises:

> determining a state of charge of the energy storage device, and
> controlling the hydrogen production device based on the determined state of charge of the energy storage device such that electrical power is supplied from the hydrogen production device to the energy storage device for re-charging the energy storage device.

After the energy storage device has been used to temporarily provide the power supply of the hydrogen production device, the energy storage device may have been discharged to a level that requires re-charging. After re-charging, the energy storage device is ready for providing another FRT in case of another grid fault.

For example, the energy storage device comprises a power storage unit and a second control unit for controlling the power storage unit. The state of charge of the power storage unit is, for example, determined, by the second control unit.

According to a further embodiment of the first aspect, the method further comprises:

> determining a fault duration of the fault of the electrical grid, and
> carrying out step b) as long as the determined fault duration is smaller than or equal to a predetermined time period.

Hence, in a case in which the determined fault duration exceeds the predetermined time period, step b) is not carried out anymore. In other words, step b) is carried out until the determined fault duration exceeds the predetermined time period.

Thus, only during a short-term fault of the grid, the energy storage device is taking over the power supply of the hydrogen production device. In case of a grid fault continuing for a longer duration than the predetermined time period, the hydrogen production device is shut down.

The fault duration is, in particular, a timely duration of a detected fault (e.g., undervoltage-fault, overvoltage-fault) of the electrical grid.

The fault duration is, for example, determined by determining a time period during which a measured voltage value of the electrical grid deviates (e.g., significantly, i.e. by more than the threshold) from the nominal voltage value.

The predetermined time period is, for example, 5 seconds, 10 seconds, 15 seconds, 20 seconds or 25 seconds.

According to a further embodiment of the first aspect, a storage capacity of the energy storage device is equal to a power consumption of the hydrogen production device during a predetermined time period.

Thus, the storage capacity is sufficient to provide the power supply of the hydrogen production device during a short-term grid fault.

The predetermined time period is, for example, 5 seconds, 10 seconds, 15 seconds, 20 seconds or 25 seconds.

The method comprises, for example, before step a) a step of determining an average and/or a maximum power consumption per time of the hydrogen production device.

The power consumption per time depends on the electrolyzer and converter system efficiency and can also vary with electrolyzer technology used and per-centage loading of the electrolyzer. As an example, a 5 MW electrolyzer may produce 90 kg of hydrogen in one hour at full load (i.e. at 5 MW power consumption level), therefore 5 MWh of electrical energy can be converted in 90 kg of hydrogen gas ($H_2$ gas).

According to a further embodiment of the first aspect, the energy storage device comprises a supercapacitor, a battery and/or a hydrogen tank and a fuel cell.

A supercapacitor (also called ultracapacitor) has a large storage capacity.

An exemplary supercapacitor, e.g., an exemplary single supercapacitor module, has a capacity C of 5 F (5 Farad) at a voltage V of 200 V. Based on the capacitor energy equation given below, the amount of energy E such a module can store can be estimated to 100,000 Joules (i.e. 0.027778 kWh or 100kWs):

$$E = 0.5 * C * V^2$$

Typically, such modules are stacked together in various series and parallel combination to get more power and energy storage capacity. For instance, a standard cabinet of supercapacitor with an above described 5 F module at 200 V can be stacked to provide power of 1 MW for 5 seconds to an electrical system.

According to a second aspect, a computer program product is provided. The computer program product comprises a program code for executing the above-described method when run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

According to a third aspect, a control system for controlling a power input of a hydrogen production device of a renewable hydrogen power plant is provided. The control system is configured for carrying out the above-described method.

The respective entity, e.g., the control system and the control units described herein, may be implemented in hardware and/or in software. If said entity is implemented in hardware, it may be embodied as a device, e.g., as a computer or as a processor or as a part of a system, e.g., a computer system. If said entity is implemented in software it may be embodied as a computer program product, as a function, as a routine, as a program code or as an executable object.

According to a fourth aspect, a renewable hydrogen power plant is provided. The renewable hydrogen power plant is configured for connection with an electrical grid. Furthermore, the renewable hydrogen power plant comprises:

> a renewable energy generation facility for generating electrical power,
> a hydrogen production facility for producing hydrogen from the generated electrical power, wherein the hydrogen production facility includes:
>
>> a hydrogen production device with a first control unit for detecting a fault of the electrical grid based on a deviation of a received voltage value of the electrical grid from a nominal voltage value, and
>> an energy storage device with a power storage unit and a second control unit for controlling the power storage unit such that electrical power is supplied from the power storage unit to the hydrogen production device when the fault of the electrical grid is detected.

In embodiments of the fourth aspect, the renewable energy generation facility comprises one or more wind turbines, a wind farm, one or more photovoltaic devices, a photovoltaic farm, a solar farm, one or more geothermal devices, a geothermal farm, a hydro power farm and/or other types of renewable energy generation devices/farms.

The wind turbine is an apparatus to convert the wind's kinetic energy into electrical energy (electrical power). The wind turbine comprises, for example, a rotor having one or more blades connected each to a hub, a nacelle including a generator, and a tower holding, at its top end, the nacelle. The tower of the wind turbine may be connected via a transition piece to a foundation of the wind turbine, such as a concrete foundation or a monopile in the seabed.

The wind turbine is, for example, an onshore wind turbine. The wind turbine may, however, also be an offshore wind turbine. Offshore includes marine environments as well as lakes and other open waters.

According to an embodiment of the fourth aspect, the renewable hydrogen power plant comprises:

> a terminal for electrical connection with the electrical grid, and
> an electrical connection member electrically connecting the renewable energy generation facility and the hydrogen production facility in common with the terminal.

Thus, the facilities of the renewable hydrogen power plant are connected to the electrical grid in common with a single power transmission. Hence, the power supply and loads of the individual facilities can be balanced before delivering the resulting power to the grid. In particular, the power supply and loads of the individual facilities can be balanced to provide an adjusted power output by the plant.

The electrical connection member includes, for example, a power transmission cable, a connection bus or the like.

The embodiments and features described with reference to the first aspect of the present invention apply, mutatis mutandis, to the other aspects (second to fourth aspect) of the present invention and vice versa.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:

> Fig. 1 shows a renewable hydrogen power plant comprising a renewable energy generation facility and a hydrogen production facility according to an embodiment, the plant being electrically connected to an electrical grid;
>
> Fig. 2 shows a renewable hydrogen power plant according to a further embodiment;
>
> Fig. 3 shows a hydrogen production facility of a renewable hydrogen power plant according to a further embodiment;

Fig. 4 shows a power storage unit of the hydrogen production device of Fig. 3 according to an embodiment;

Fig. 5 shows a power storage unit of the hydrogen production device of Fig. 3 according to a further embodiment;

Fig. 6 shows a power storage unit of the hydrogen production device of Fig. 3 according to a further embodiment;

Fig. 7 shows a diagram illustrating a response of the renewable hydrogen power plant of Fig. 1, 2 or 3 to a fault of the electrical grid (low-voltage event) according to an embodiment; and

Fig. 8 shows a flow chart illustrating a method for controlling a power input of a hydrogen production device of a renewable hydrogen power plant according to an embodiment.

In the Figures, like reference numerals designate like or functionally equivalent elements, unless otherwise indicated.

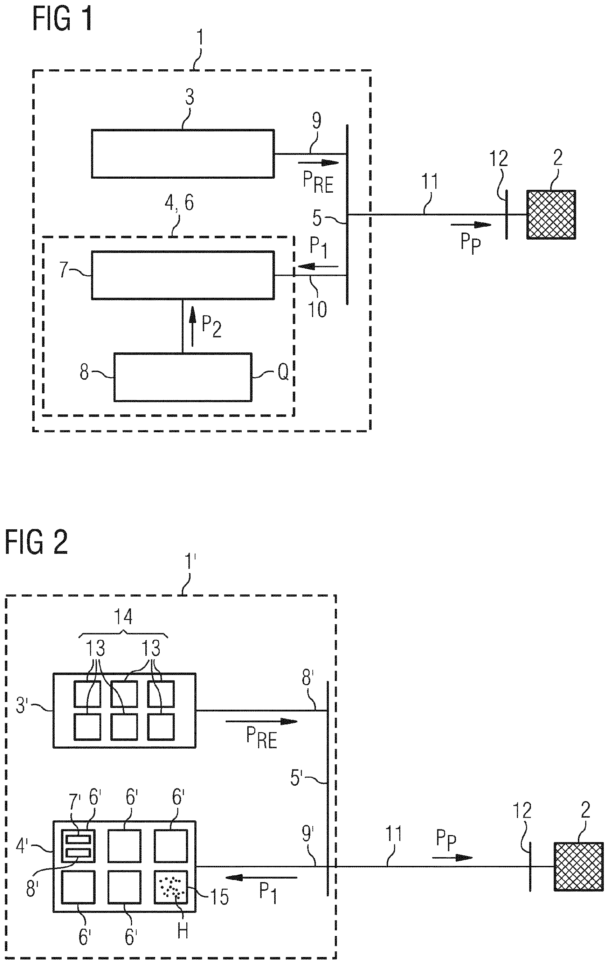

Fig. 1 shows a renewable hydrogen power plant 1 according to an embodiment. The renewable hydrogen power plant 1 is configured for delivering electrical power $P_P$ and hydrogen H (Fig. 2). The renewable hydrogen power plant 1 is electrically connected to an electrical grid 2 for feeding generated power $P_P$ into the grid 2.

The renewable hydrogen power plant 1 comprises a renewable energy generation facility 3 for generating electrical power $P_{RE}$. The plant 1 further comprises a hydrogen production facility 4 for producing hydrogen H from the generated electrical power $P_{RE}$.

The renewable energy generation facility 3 and the hydrogen production facility 4 are electrically connected with each other and with the electrical grid 2 at an electrical connection member 5.

The hydrogen production facility 4 may include one or more hydrogen production apparatuses 6. The hydrogen production facility 4, e.g., each hydrogen production apparatus 6, includes a hydrogen production device 7 and an energy storage device 8, e.g. a power storage device 8. Thus, the hydrogen production facility 4 may also include more than one hydrogen production device 7 and more than one power storage device 8 (see Fig. 2). The hydrogen production device 7 may include an electrolysis unit for converting water by electrical power $P_1$, $P_2$ into hydrogen H, e.g., into hydrogen gas H. The power storage device 8 is electrically connected to the hydrogen production device 7.

During normal operation, the hydrogen production device 7 consumes electrical power $P_1$ via the electrical connection member 5. The electrical power $P_1$ consumed by hydrogen production device 7 via the electrical connection member 5 is usually electrical power $P_{RE}$ generated by the renewable energy generation facility 3. However, when it is desired to increase a load of the plant 1 with respect to the grid 2, the electrical power $P_1$ consumed by hydrogen production device 7 via the electrical connection member 5 can also be provided from the grid 2.

During a fault of the electrical grid 2 (such as a voltage drop or increase), the supply of power $P_1$ via the electrical connection member 5 may be stopped. Instead, electrical power $P_2$ can be supplied from the storage device 8 to the hydrogen production device 7.

Further shown in Fig. 1 are a power transmission connection 9 (e.g., one or more power transmission cables) for transmitting the power $P_{RE}$ generated by the renewable energy generation facility 3 to the electrical connection member 5. Furthermore, the renewable hydrogen power plant 1 includes a power transmission connection 10 (e.g., one or more power transmission cables) for transmitting the power $P_1$ from the electrical connection member 5 to the hydrogen production facility 4 for producing hydrogen H.

Hence, the renewable energy generation facility 3 acts as a power source to the electrical connection member 5 and the hydrogen production facility 4 acts as a load to the electrical connection member 5.

The electrical connection member 5 is, for example, a power transmission unit (e.g., comprising one or more power transmission cables) electrically connecting the renewable energy generation facility 3 and the hydrogen production facility 4 with each other and with the grid 2.

Further shown in Fig. 1 is an electrical connecting unit 11 and a terminal 12. The electrical connecting unit 11 is connecting the electrical connection member 5 with the terminal 12 and the terminal 12 is electrically connected with the electrical grid 2. Hence, the terminal 12 is configured for feeding power $P_P$ into the grid 4.

Fig. 2 shows a renewable hydrogen power plant 1' according to a further embodiment.

The renewable hydrogen power plant 1' comprises, similar as the renewable hydrogen power plant 1 of Fig. 1, a renewable energy generation facility 3' and a hydrogen production facility 4'. The renewable energy generation facility 3' and the hydrogen production facility 4' are electrically connected with each other and with the electrical grid 2 at an electrical connection member 5'.

The renewable energy generation facility 3' of the plant 1' includes, for example, one or more wind turbines 13 for generating electrical power $P_{RE}$. The one or more wind turbines 13 may form a wind farm 14. In other examples, the renewable energy generation facility 3' may instead or in addition to wind turbines 13 and/or a wind farm 14 also comprise one or more photovoltaic elements, a photovoltaic farm and/or another renewable energy source (not shown).

As shown in Fig. 2, the hydrogen production facility 4' includes one or more hydrogen production apparatuses 6'. Each of the hydrogen production apparatuses 6' is configured similar as the hydrogen production apparatus 6 in Fig. 1. In particular, as indicated for one of the hydrogen production apparatuses 6' in Fig. 2, each of the hydrogen production apparatuses 6' comprises a hydrogen production device 7' similar as the hydrogen production device 7 in Fig. 1 and a storage device 8' similar as the storage device 8 in Fig. 1. In particular, each of the hydrogen production devices 7' may include an electrolysis unit for converting water by electrical power $P_1$, $P_2$ into hydrogen H, e.g., into hydrogen gas H. The hydrogen production facility 4' may also include one or more hydrogen tanks 15 for temporarily storing the produced hydrogen H.

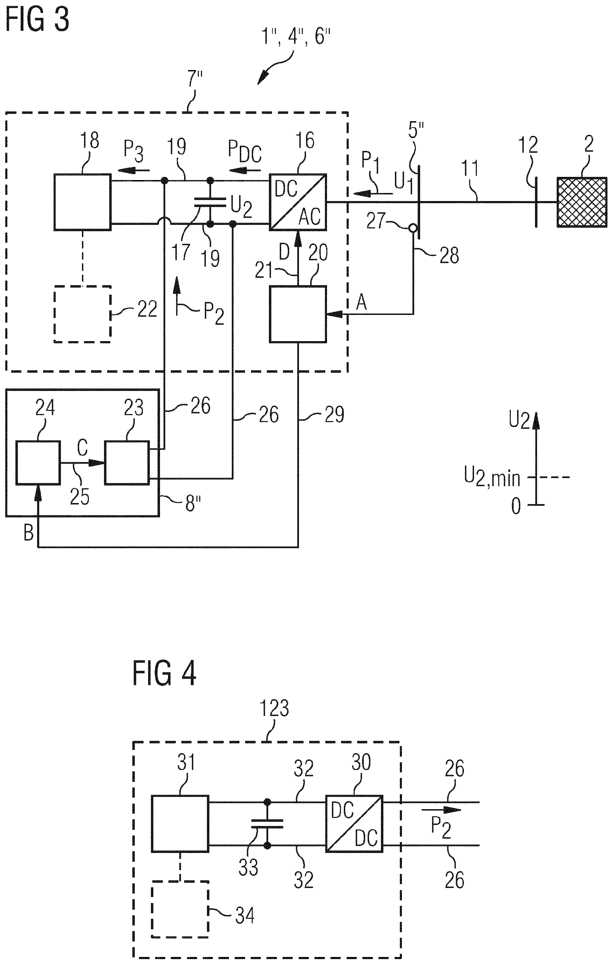

Fig. 3 shows a hydrogen production apparatus 6" of a hydrogen production facility 4" of a renewable hydrogen power plant 1" according to a further embodiment.

The hydrogen production facility 4", e.g., the hydrogen production apparatus 6", comprises a hydrogen production device 7" and a power storage device 8".

The hydrogen production device 7" comprises an AC-DC converter 16 for converting AC power $P_1$ supplied from the electrical connection member 5 into DC power $P_{DC}$. The hydrogen production device 7" further comprises a capacitor 17 for temporarily storing the DC power $P_{DC}$ provided by the AC-DC converter 16. The hydrogen production device 7" comprises in addition an electrolysis unit 18 for producing hydrogen H by an electrolysis process. The electrical power $P_1$, $P_2$ required for producing hydrogen H can advantageously be delivered selectively from the AC-DC converter 16 (as DC power $P_{DC}$) or - on a short term - also from the power storage device 8" (as power $P_2$).

In the example of Fig. 3, the AC-DC converter 16, the capacitor 17 and the electrolysis unit 18 are connected electrically with each other in parallel by electrical lines 19.

The hydrogen production device 7" comprises a first control unit 20 for controlling the AC-DC converter 16. The first control unit 20 is electrically connected by an electrical line and/or data line 21 with the AC-DC converter 16.

In addition to the above-described units, the hydrogen production device 7" may also comprise further units such as a control unit 22 (third control unit 22), a DC-DC converter (not shown) arranged, for example, between the capacitor 17 and the electrolysis unit 18, and a further capacitor (not shown) arranged, for example, between a DC-DC converter and the electrolysis unit 18.

As shown in Fig. 3, the power storage device 8" comprises a power storage unit 23 and a second control unit 24 for controlling the power storage unit 23. The second control unit 24 is electrically connected by an electrical line and/or data line 25 with the power storage unit 23. Further, the power storage unit 23 is electrically connected (e.g., in parallel) to the electrolysis unit 18 of the hydrogen production device 7" by electrical lines 26.

The power storage unit 23 is configured with a large storage capacity. The storage capacity of the power storage unit 23 is, in particular, sufficient for supplying the electrolysis unit 18 of the hydrogen production device 7" with the amount of power necessary to operate for, for example, 5 seconds, 10 seconds, 15 seconds, 20 seconds and/or 25 seconds. Thus, the storage capacity of the power storage unit 23 is large enough to allow a ride-through through a short-term fault of the electrical grid 2.

As shown exemplarily in Fig. 3, the renewable hydrogen power plants 1, 1', 1" comprises, for example, a measurement unit 27 for monitoring a voltage $U_1$ of the electrical grid 2. Hence, with the measurement unit 27, a momentary voltage value $U_1$ of the electrical grid 2 can be measured (e.g., repeatedly). The voltage value $U_1$ of the electrical grid 2 is, for example, measured at the electrical connection member 5, 5', 5", as illustrated exemplarily in Fig. 3.

The measurement unit 27 is electrically connected by an electrical line and/or data line 28 with the first control unit 20 of the hydrogen production device 7". The measurement unit 27 sends an information A (signal A) with respect to the measured voltage value $U_1$ of the electrical grid 2 to the first control unit 20.

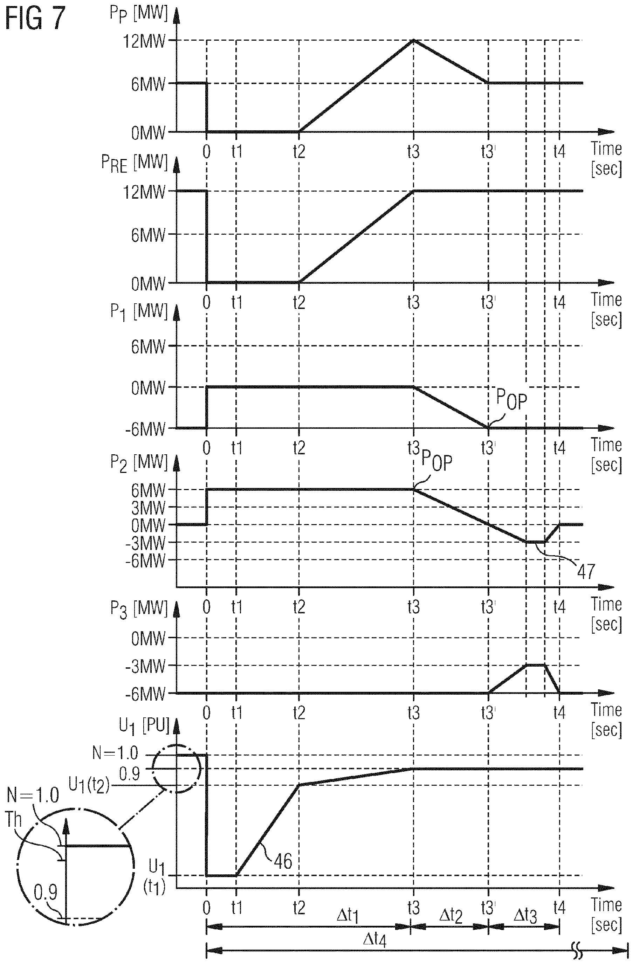

The first control unit 20 is, in particular, configured to detect a fault 46 (Fig. 7) of the electrical grid 2 based on the received information A. The first control unit 20 is, for example, comparing the received voltage value $U_1$ of the electrical grid 2 with a nominal voltage value N (Fig. 7) of the electrical grid 2.

The first control unit 20 is electrically connected by an electrical line and/or data line 29 with the second control unit 24 of the power storage device 8". The first control unit 20 is configured to send an information B (signal B) with respect to the detected grid fault 46 to the power storage device 8", in particular to the second control unit 24 of the power storage device 8".

In case that a fault 46 of the grid 2 was detected, the second control unit 24 sends a control signal C via the line 25 to the power storage unit 23. By receiving the control signal C, the power storage unit 23 is controlled such that electrical power $P_2$ is supplied from the power storage unit 23 to the hydrogen production device 7", in particular to the capacitor 17 of the hydrogen production device 7".

Moreover, in case that a fault 46 of the grid 2 was detected by the first control unit 20, the first control unit 20 sends a control signal D via the line 21 to the AC-DC converter 16 for stopping a supply of power $P_1$ from the connection member 5 to the electrolysis unit 18.

In Fig. 4 to 6, different embodiments of the power storage unit 23, 123, 223, 323 are illustrated.

The power storage unit 123 in Fig. 4 comprises a DC-DC converter 30 and a supercapacitor 31. The DC-DC converter 30 is electrically connected via the lines 26 to the capacitor 17 (Fig. 3) of the hydrogen production device 7" to provide electrical power $P_2$ in the case of a grid fault 46. The DC-DC converter 30 and the supercapacitor 31 are electrically connected to each other (e.g.,

in parallel) by electrical lines 32. The supercapacitor 31 is a capacitor with a very large storing capacity. Optionally, the power storage unit 123 may further comprise another capacitor 33 arranged and connected between the supercapacitor 31 and the DC-DC converter 30.

As shown in dashed lines in Fig. 4, the power storage unit 123 may optionally further include a control unit 34 (fourth control unit 34) for controlling the supercapacitor 31. Although not shown in the figures, the fourth control unit 34 is communicating with the second control unit 24 (Fig. 3). Further, any of the here described power storage units 23, 123, 223, 323 may comprise a fourth control unit such as the fourth control unit 34 for controlling the respective storage medium.

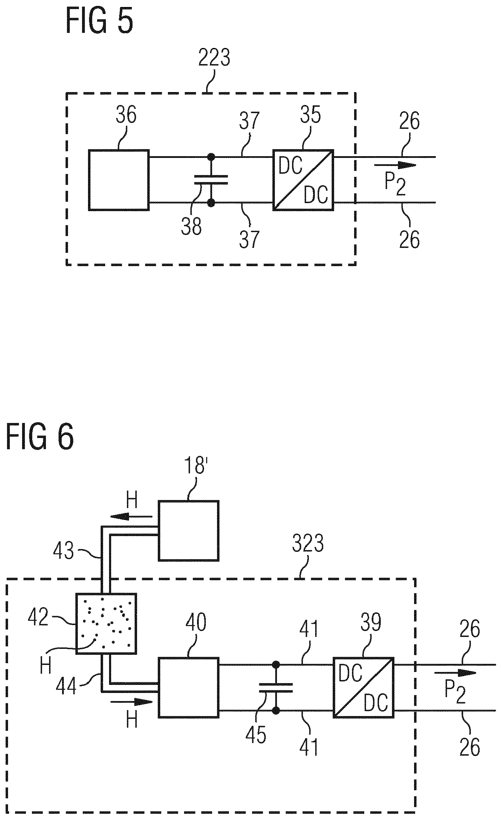

Fig. 5 shows another embodiment of a power storage unit 223. The power storage unit 223 comprises a DC-DC converter 35 and a battery 36 electrically connected with each other (e.g., in parallel) via electrical lines 37. Further, the DC-DC converter 35 is electrically connected (e.g., in parallel) via the lines 26 with the capacitor 17 (Fig. 3) of the hydrogen production device 7" to provide electrical power $P_2$ in the case of a grid fault 46. Optionally, the power storage unit 223 may further comprise another capacitor 38 arranged and connected between the battery 36 and the DC-DC converter 35.

Fig. 6 shows another embodiment of a power storage unit 323. The power storage unit 323 comprises a DC-DC converter 39 and a fuel cell 40 electrically connected with each other (e.g., in parallel) via electrical lines 41. The power storage unit 323 further comprises a hydrogen tank 42 for storing hydrogen H. The hydrogen tank 42 is fluidly connected via a first pipe 43 with an electrolysis unit 18' (similar as the electrolysis unit 18 in Fig. 3) of the hydrogen production device 7". The hydrogen tank 42 is filled with hydrogen H produced in the electrolysis unit 18'. The hydrogen tank 42 is further fluidly connected via a second pipe 44 with the fuel cell 40. The fuel cell 40 uses the delivered hydrogen H to generate electrical power. Hence, the combination of the hydrogen tank 42 and the fuel cell 40 functions as an energy storage facility capable of providing electrical energy on demand.

As shown in Fig. 6, the DC-DC converter 39 is electrically connected (e.g., in parallel) via the lines 26 with the capacitor 17 (Fig. 3) of the hydrogen production device 7" to provide electrical power $P_2$ in the case of a grid fault 46. Optionally, the power storage unit 323 may further comprise another capacitor 45 arranged and connected between the fuel cell 40 and the DC-DC converter 39.

In Fig. 7, a fault ride-through of the renewable hydrogen power plant 1, 1', 1" in case of a low-voltage event 46 of the electrical grid 2 is illustrated.

Fig. 7 shows a timely evolution of the power $P_{RE}$ generated by the renewable hydrogen facility 3, 3', 3". Further displayed in Fig. 7 is the power $P_1$, $P_2$ consumed by the hydrogen production device 7, 7', 7" (or by multiple hydrogen production devices 7, 7', 7") of the hydrogen production facility 4, 4', 4". $P_1$ is the electrical power provided from the electrical connection member 5, 5', 5" (e.g., from the renewable energy generation facility 3, 3', 3") to the hydrogen production device(s) 7, 7', 7" during normal condition of the grid 2. $P_2$ is the electrical power provided from the power storage device 8, 8', 8" during a short-term grid fault 46. Moreover, $P_3$ indicates the electrical power at the electrolysis unit 18, 18'.

Also shown in the top panel of Fig. 7 is the timely evolution of the overall power $P_P$ delivered by the renewable hydrogen power plant 1, 1', 1" to the electrical grid 2. The overall power $P_P$ is the sum of the power $P_{RE}$ generated and the power $P_1$ consumed by the plant 1, 1', 1". The power $P_1$ is, in particular, the power consumed by the hydrogen production facility 4, 4', 4" at the connection member 5, 5', 5".

All power values in Fig. 7 are given in the unit of Megawatt (MW) .

In the lower-most panel of Fig. 7, the timely evolution of the voltage $U_1$ of the electrical grid 2 is shown. The voltage $U_1$ is given as fraction of a nominal voltage N of the grid 2 ("per unit (PU)").

The shown example in Fig. 7 illustrates a low-voltage event 46, in which the voltage $U_1$ of the electrical grid 2 drops from the nominal value N to a value of $U_1(t1)$ at the time t=0. Then, at the time t=t1 the voltage $U_1$ recovers slowly within the time span from time t1 to t3. The total duration $\Delta t_1$ of the undervoltage-fault 46 of the grid 2 is, for example, a few seconds.

During normal operation (before time t=0), the renewable energy generation facility 3, 3', 3" (e.g., a wind farm 14, Fig. 2) produces, for example, a power $P_{RE}$ of 12 MW. Out of the 12 MW power output, for example, 6 MW are fed into the hydrogen production facility 4, 4', 4" for producing hydrogen H ($P_1$=-6 MW). The remaining 6 MW are fed into the grid 4 ($P_P$=6 MW) .

See also Fig. 1 in which the power $P_{RE}$ is indicated as provided by the renewable energy generation facility 3 to the connection member 5 (transmission line 9). Further, in Fig. 1, the power $P_1$ is indicated which is supplied from the connection member 5 (transmission line 10) and consumed by the hydrogen production facility 4. Finally, the power $P_P$ ($P_P = P_{RE} - P_1$) is delivered from the connection member 5 to the grid 2.

During a low-voltage event 46, as shown in Fig. 7, the renewable energy generation facility 3, 3', 3" stops delivering power $P_{RE}$ to the connection member 5, 5', 5" ($P_{RE}$=0 during time span from t=0 to t=t2). In particular, the renewable energy generation facility 3, 3', 3" includes an own FRT-system which allows a ride-through during a short-term grid fault 46 without switching off the renewable energy generation facility 3, 3', 3" and/or without switching off generators (such as wind turbines 13, Fig. 2) of the renewable energy generation facility 3, 3', 3".

Furthermore, during the low-voltage event 46, the hydrogen production device(s) 7, 7', 7" stop consuming power $P_1$ from the connection member 5, 5', 5" ($P_1$=0 during the time span from t=0 to t=t3). In order to maintain hydrogen production nevertheless and to not switch of the hydrogen production device(s) 7, 7', 7", the hydrogen production device(s) 7, 7', 7" instead start consuming power $P_2$ from the power storage device(s) 8, 8', 8" ($P_2$=6 MW during the time span from t=0 to t=t3).

At time t=t2, the voltage $U_1$ of the grid 2 has not yet fully recovered but has recovered to a large percentage. At this time, the renewable energy generation facility 3, 3', 3" starts delivering power $P_{RE}$ to the connection member 5, 5', 5" by ramping up the power $P_{RE}$ from $P_{RE}$=0 to $P_{RE}$=12 MW during the time span from t=t2 to t=t3.

During the time span $\Delta t_2$ from t=t3 to t=t3' (ramping time period $\Delta t_2$), the supply of electrical power $P_2$ from the power storage device 8, 8', 8" to the hydrogen production device 7, 7', 7" is gradually ramped down from an operation power value $P_{OP}$ (e.g., 6 MW) to zero. During the same time span $\Delta t_2$, the supply of electrical power $P_1$ from the electrical connection member 5, 5', 5" to the hydrogen production device 7, 7', 7" is gradually ramped up from zero to the operation power value $P_{OP}$ (-$P_{OP}$ in Fig. 7 as $P_1$ is given as the consumption of power).

Furthermore, during a short time span $\Delta t_3$ from t=t3' to t=t4, the power storage device 8, 8', 8" is recharged (reference sign 47) by consuming power from the hydrogen production device(s) 7, 7', 7" ($P_2$ is decreasing to -3 MW and $P_3$ is increasing to -3 MW).

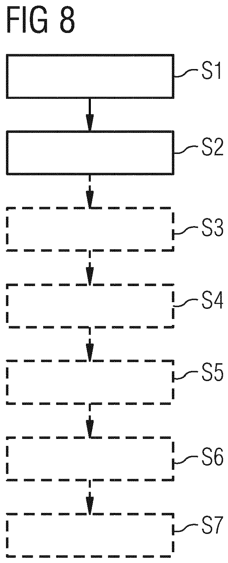

In the following, a method for controlling a power input $P_1$, $P_2$ of a hydrogen production device 7, 7', 7" of a renewable hydrogen power plant 1, 1', 1" connected to an electrical grid 2 is described with reference to Fig. 8. The renewable hydrogen power plant 1, 1', 1" comprises a renewable energy generation facility 3, 3', 3" for generating electrical power $P_{RE}$ and a hydrogen production facility 4, 4', 4" for producing hydrogen H from the generated electrical power $P_{RE}$. The hydrogen production facility 3, 3', 3" includes the hydrogen production device 7, 7', 7" and a power storage device 8, 8', 8".

In a first step S1 of the method, a fault 46 of the electrical grid 2 is detected based on a deviation of a received voltage value $U_1$ of the electrical grid from a nominal voltage value N.

As shown in Fig. 7, optionally only a deviation larger than a voltage threshold Th may be regarded as a (significant) fault 46 of the grid 2 and, thus, requiring an FRT-process.

In a second step S2 of the method, the power storage device 8, 8', 8" is controlled such that electrical power $P_2$ is supplied from the power storage device 8, 8', 8" to the hydrogen production device 7, 7', 7".

In an optional third step S3 of the method, a duration $\Delta t_1$ of the fault 46 of the electrical grid 2 is determined.

In this case, step S2 can be carried out as long as the determined duration $\Delta t_1$ is smaller than or equal to a predetermined time period $\Delta t_4$. The predetermined time period $\Delta t_4$ is, for example, 5 seconds, 10 seconds, 15 seconds, 20 seconds or 25 seconds.

If it is determined in S1 that the fault 46 of the electrical grid 2 has disappeared again, optionally the following steps S4 and S5 may be carried out.

In an optional fourth step S4 of the method, when it is determined in S1 that the grid fault 46 has disappeared again, a state of charge Q (Fig. 1) of the power storage device 8 is determined.

In an optional fifth step S5 of the method, the hydrogen production device 7 is controlled based on the determined state of charge Q of the power storage device 8 such that electrical power $P_2$ is supplied from the hydrogen production device 7 to the power storage device 8 for re-charging (see reference sign 47 in Fig. 7) the power storage device 8.

With respect to the embodiment of the plant 1" shown in

Fig. 3, by carrying out steps S1 and S2 (and optionally steps S3 to S5) of the method, a sufficient state of charge of the capacitor 17 (Fig. 3) of the hydrogen production device 7" can be secured even in the case that a power supply $P_1$ from the connection member 5 is closed due to a grid fault 46.

Furthermore, the method can also be applied for maintaining a state of charge of the capacitor 17 (Fig. 3) in a desired operation range in a more general sense by carrying out the optional steps S6 and S7.

In an optional sixth step S6 of the method, a voltage $U_2$ (Fig. 3) of the capacitor 17 of the hydrogen production device 7" is determined, the capacitor 17 being electrically connected to the electrolysis unit 18 of the hydrogen production device 7".

In an optional seventh step S7 of the method, the power storage device 8" is controlled based on the determined voltage $U_2$ of the capacitor 17. In particular, when the determined voltage $U_2$ of the capacitor 17 is smaller than a predetermined minimum voltage value $U_{2,min}$ (Fig. 3), electrical power $P_2$ is supplied from the power storage device 8" to the capacitor 17.

Although the present invention has been described in accordance with preferred embodiments, it is obvious for the person skilled in the art that modifications are possible in all embodiments.

**Claims**

1. A method for controlling a power input ($P_1$, $P_2$) of a hydrogen production device (7) of a renewable hydrogen power plant (1) connected to an electrical grid (2), the renewable hydrogen power plant (1) comprising a renewable energy generation facility (3) for generating electrical power ($P_{RE}$) and a hydrogen production facility (4) for producing hydrogen (H) from the generated electrical power ($P_{RE}$), the hydrogen production facility (4) including the hydrogen production device (7) and an energy storage device (8), and the method comprising:

a) detecting (S1) a fault (46) of the electrical grid (2) based on a deviation of a received voltage value ($U_1$) of the electrical grid (2) from a nominal voltage value (N), and
b) controlling (S2) the energy storage device (8) such that electrical power ($P_2$) is supplied from the energy storage device (8) to the hydrogen production device (7).

2. The method according to claim 1, wherein the hydrogen production device (7") includes an electrolysis unit (18) and a capacitor (17) electrically connected to the electrolysis unit (18), and the energy storage device (8") is controlled such that, when the fault (46) of the electrical grid (2) is detected, electrical power ($P_2$) is supplied from the energy storage device (8") to the hydrogen production device (7") by charging the capacitor (17) of the hydrogen production device (7 ") .

3. The method according to claim 2, further comprising:

    determining (S6) a voltage ($U_2$) of the capacitor (17) of the hydrogen production device (7"), and controlling (S7) the energy storage device (8") based on the determined voltage ($U_2$) such that electrical power ($P_2$) is supplied from the energy storage device (8") to the capacitor (17) of the hydrogen production device (7") when the determined voltage ($U_2$) of the capacitor (17) is smaller than a predetermined minimum voltage value ($U_{2,min}$).

4. The method according to one of claims 1 - 3, wherein, when a fault (46) has been detected in step a), the hydrogen production device (7) is controlled such that a power consumption of the hydrogen production device (7) is reduced gradually to a predetermined minimum power value of the hydrogen production device (7).

5. The method according to one of claims 1 - 4, wherein:

    the renewable energy generation facility (3) and the hydrogen production facility (4") are electrically connected with each other and with the electrical grid (2) at an electrical connection member (5"),
    the hydrogen production device (7") comprises an AC-DC converter (16) for converting AC power ($P_1$) supplied from the electrical connection member (5") into DC power ($P_{DC}$), an electrolysis unit (18) for producing hydrogen (H) by means of DC power ($P_{DC}$, $P_2$) supplied from the AC-DC converter (16) and/or from the energy storage device (8"), and a first control unit (20) for controlling the AC-DC converter (16),
    the energy storage device (8") comprises a power storage unit (23) and a second control unit (24) for controlling the power storage unit (23), the first control unit (20) detects the fault (46) of the electrical grid (2) and sends an information (B) about the detected fault (46) to the second control unit (24), and
the second control unit (24) sends a control signal (C) to the power storage unit (23) for controlling the power storage unit (23) such that electrical power ($P_2$) is supplied to the hydrogen production device (7).

6. The method according to one of claims 1 - 5, wherein:

    the renewable energy generation facility (3) and the hydrogen production facility (4) are electrically connected with each other and with the electrical grid (2) at an electrical connection member (5), and
    when the fault (46) of the electrical grid (2) is detected, the hydrogen production device (7) is controlled such that a supply of electrical power ($P_1$) from the electrical connection member (5) is stopped.

7. The method according to one of claims 1 - 6, wherein

    the renewable energy generation facility (3) and the hydrogen production facility (4) are electrically connected with each other and with the electrical grid (2) at an electrical connection member (5), and
    when it is determined that the fault (46) of the electrical grid (2) has disappeared again, the energy storage device (8) is controlled such that the supply of electrical power ($P_2$) from the energy storage device (8) to the hydrogen production device (7) is stopped, and/or the hydrogen production device (7) is controlled such that a supply of electrical power ($P_1$) from the electrical connection member (5) is reassumed.

8. The method according to one of claims 1 - 7, wherein, when it is determined that the fault (46) of the electrical grid (2) has disappeared again, the energy storage device (8) is controlled such that the supply of electrical power ($P_2$) from the energy storage device (8) to the hydrogen production device (7) is ramped down from an operation power value ($P_{OP}$) to zero during a predetermined ramping time period ($\Delta t_2$), and the hydrogen production device (7) is controlled such that the supply of electrical power ($P_1$) from the electrical connection member (5) is ramped up from zero to the operation power value ($P_{OP}$) in the predetermined ramping time period ($\Delta t_2$).

9. The method according to one of claims 1 - 8, wherein, when it is determined that the fault (46) of the electrical grid (2) has disappeared again, the method further comprises:

> determining (S4) a state of charge (Q) of the energy storage device (8), and
> controlling (S5) the hydrogen production device (7) based on the determined state of charge (Q) of the energy storage device (8) such that electrical power ($P_2$, $P_3$) is supplied from the hydrogen production device (7) to the energy storage device (8) for re-charging (47) the energy storage device (8).

10. The method according to one of claims 1 - 9, further comprising:

> determining (S3) a duration ($\Delta t_1$) of the fault (46) of the electrical grid (2), and
> carrying out step b) as long as the determined duration ($\Delta t_1$) is smaller than or equal to a predetermined time period ($\Delta t_4$).

11. The method according to one of claims 1 - 10, wherein a storage capacity of the energy storage device (8) is equal to a power consumption of the hydrogen production device (7) during a predetermined time period ($\Delta t_4$).

12. The method according to one of claims 1 - 11, wherein the energy storage device (8) comprises a supercapacitor (31), a battery (36) and/or a hydrogen tank (42) and a fuel cell (40).

13. A computer program product comprising a program code for executing the method according to one of claims 1 - 12 when run on at least one computer.

14. A renewable hydrogen power plant (1) configured for connection with an electrical grid (2), comprising:

> a renewable energy generation facility (3) for generating electrical power ($P_{RE}$),
> a hydrogen production facility (4) for producing hydrogen (H) from the generated electrical power ($P_{RE}$), wherein the hydrogen production facility (4) includes:

>> a hydrogen production device (7, 7") with a first control unit (20) for detecting a fault (46) of the electrical grid (2) based on a deviation of a received voltage value ($U_1$) of the electrical grid (2) from a nominal voltage value (N), and
>> a energy storage device (8, 8") with a power storage unit (23) and a second control unit (24) for controlling the power storage unit (23) such that electrical power ($P_2$) is supplied from the power storage unit (23) to the hydrogen production device (7, 7") when the fault (46) of the electrical grid (2) is detected.

15. The renewable hydrogen power plant according to claim 14, comprising:

> a terminal (12) for electrical connection with the electrical grid (2), and
> an electrical connection member (5) electrically connecting the renewable energy generation facility (3) and the hydrogen production facility (4) in common with the terminal (12).

**FIG 1**

**FIG 2**

# FIG 3

# FIG 4

## FIG 5

223

36    37    35    26

DC / DC    P₂

38    37    26

## FIG 6

18'

H

43    323

42    40    41    39    26

DC / DC    P₂

H    45    26

44

H    41    26

FIG 7

FIG 8

**EP 4 398 434 A1**

Europäisches Patentamt

European Patent Office

Office européen des brevets

## EUROPEAN SEARCH REPORT

Application Number

EP 23 15 0291

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 114 677 098 A (HAINAN TIANYU SCIENCE AND TECH GROUP LIMITED COMPANY) 28 June 2022 (2022-06-28) | 1,4,5,7, 9-15 | INV. H02J3/00 H02J3/32 |
| Y | * paragraph [0026] * | 2,3 | H02J3/38 |
| A | | 6,8 | H02J9/06 H02J15/00 |
| Y | DE 10 2020 112880 A1 (SMA SOLAR TECHNOLOGY AG [DE]) 18 November 2021 (2021-11-18) * figure 2 * * paragraph [0028] * | 2,3 | |
| Y | CN 114 389 310 A (CHINESE PEOPLE LIBERATION NAVY ENGINEERING UNIV) 22 April 2022 (2022-04-22) * claim 6 * | 2,3 | |
| A | HUANG CHUNJUN ET AL: "Cooperative Control of Wind-Hydrogen-SMES Hybrid Systems for Fault-Ride-Through Improvement and Power Smoothing", IEEE TRANSACTIONS ON APPLIED SUPERCONDUCTIVITY, IEEE, USA, vol. 31, no. 8, 10 August 2021 (2021-08-10), pages 1-7, XP011875744, ISSN: 1051-8223, DOI: 10.1109/TASC.2021.3103729 [retrieved on 2021-08-30] * the whole document * | 1-15 | TECHNICAL FIELDS SEARCHED (IPC) H02J |

The present search report has been drawn up for all claims

| Place of search | Date of completion of the search | Examiner |
|---|---|---|
| Munich | 7 June 2023 | Chabas, Julien |

EPO FORM 1503 03.82 (P04C01)

## ANNEX TO THE EUROPEAN SEARCH REPORT
## ON EUROPEAN PATENT APPLICATION NO.

EP 23 15 0291

This annex lists the patent family members relating to the patent documents cited in the above-mentioned European search report.
The members are as contained in the European Patent Office EDP file on
The European Patent Office is in no way liable for these particulars which are merely given for the purpose of information.

07-06-2023

| Patent document cited in search report | Publication date | Patent family member(s) | | Publication date |
|---|---|---|---|---|
| CN 114677098 A | 28-06-2022 | NONE | | |
| DE 102020112880 A1 | 18-11-2021 | CN | 115552056 A | 30-12-2022 |
| | | DE | 102020112880 A1 | 18-11-2021 |
| | | EP | 4150134 A1 | 22-03-2023 |
| | | US | 2023045707 A1 | 09-02-2023 |
| | | WO | 2021228770 A1 | 18-11-2021 |
| CN 114389310 A | 22-04-2022 | NONE | | |

EPO FORM P0459

For more details about this annex : see Official Journal of the European Patent Office, No. 12/82